# EUROPEAN PATENT APPLICATION

(11) **EP 4 675 121 A1**
(43) Date of publication of application: **07.01.2026**
(21) Application number: 25186880.8
(22) Date of filing: 02.07.2025
(51) Int. Cl.: F16D 3/202, F16D 3/205

(54) **TRANSMISSION UNIT**

(30) Priority: 02.07.2024 IT 202400015232
(71) Applicant: Poggipolini S.p.A., 40068 San Lazzaro di Savena (IT)
(72) Inventor: NANNINI, Lorenzo, 40068 SAN LAZZARO DI SAVENA (BO) (IT); RIOLI, Mauro, 40068 SAN LAZZARO DI SAVENA (BO) (IT); CAVANI, Gian Luigi, 40068 SAN LAZZARO DI SAVENA (BO) (IT)
(74) Representative: Studio Torta S.p.A.

(57) **Abstract**

A transmission unit for transmitting motion from a rotating body (2) to a driven body and having a rotating body (2) and a drive unit (4; 404); wherein the rotating body (2) has a longitudinal axis (X) and is configured to be rotated, in use, by an actuator, in particular an engine; wherein the drive unit (4; 404) is configured to couple, in use, with a driven body; wherein the drive unit (4; 404) is fixed to the rotating body (2), so as to be integral with the rotating body (2) in the rotation around the longitudinal axis (X).

## Description

### CROSS-REFERENCE TO RELATED APPLICATIONS

This patent application claims priority from Italian patent application no. 102024000015232 filed on July 2, 2024, the entire disclosure of which is incorporated herein by reference.

### TECHNICAL FIELD

The present invention relates to a transmission unit.

### STATE OF THE ART

It is known to use a transmission unit to transmit motion from an engine, i.e. a transferring body, to a driven body. There are many embodiments and possible applications of a transmission unit.

Among the transmission units of known type, there are for example the axle shafts of a motor vehicle, which are configured to transmit energy from the engine to the wheels. A transmission unit, for example an axle shaft, generally comprises a shaft having a longitudinal rotation axis and configured to be coupled, for example by means of a gear, at one end with the engine and at the other end with a driven wheel.

A transmission unit is generally made of material highly resistant to fatigue and having: high surface hardness, and wear-resistance. For example, a transmission unit of known type is made of hardened steel, such as case-hardened or hardened steel. However, this known type of transmission unit has the disadvantage of being heavy and not suitable for high-performance applications, for which it is necessary to: withstand very high stresses and wear; and, at the same time, reduce weights as much as possible.

For the high-performance solutions, it is known that a transmission unit is a monolithic body, i.e., a single piece, possibly also solid, made of special metal, such as high-strength steel. This type of solution is complex and expensive to manufacture.

The object of the present invention is to provide a solution which allows significantly reducing the weights of a high-performance transmission unit, while preserving the technical performance in terms of fatigue and wear resistance.

An object of the present invention is to optimize the use of the materials forming the transmission unit.

### SUMMARY

According to the present invention, a transmission unit is provided according to what is claimed in the appended claims.

### BRIEF DESCRIPTION OF THE DRAWINGS

In order to better understand the present invention, some embodiments thereof will now be described, by way of mere non-limiting example, with reference to the accompanying drawings, wherein:
- Figure 1 is a perspective view of a first embodiment of a transmission unit according to the present invention;
- Figure 2 is a front view of the transmission unit of Figure 1;
- Figure 3 illustrates the section III-III of Figure 2;
- Figure 4 is a schematic view, with some parts removed for clarity, of a variation of a detail of Figure 3;
- Figure 5 is similar to Figure 4 and illustrates a further variation of the detail of Figure 3;
- Figure 6 is similar to Figure 4 and illustrates a further variation of the detail of Figure 3;

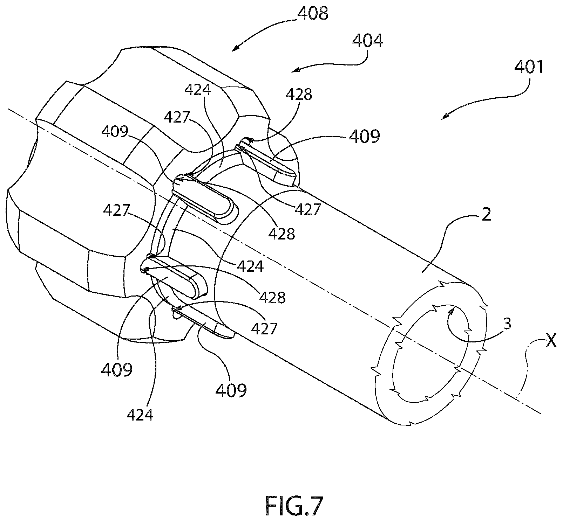

- Figure 7 is a perspective view of a second embodiment of a transmission unit according to the present invention;
- Figure 8 is an exploded view of Figure 7;
- Figure 9 is a front view of Figure 7;
- Figure 10 is the section view according to line X- X of Figure 9;
- Figure 11 is the section view according to line XI-XI of Figure 9.

### PREFERRED EMBODIMENT OF THE INVENTION

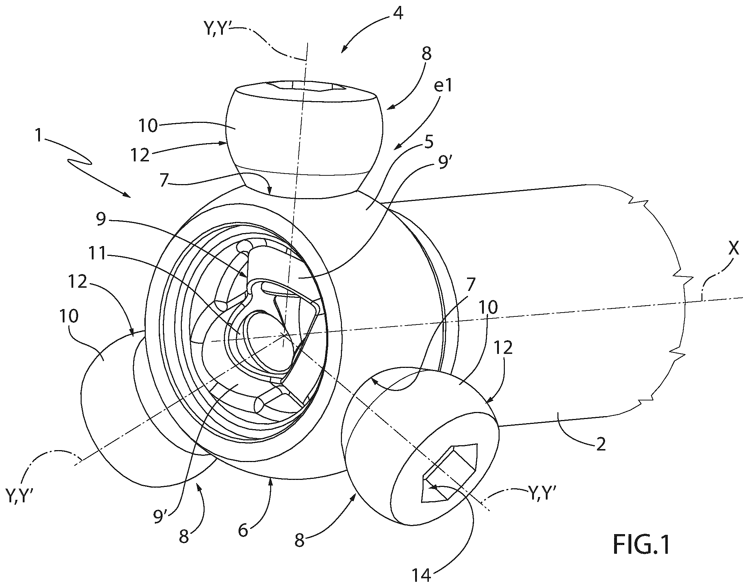

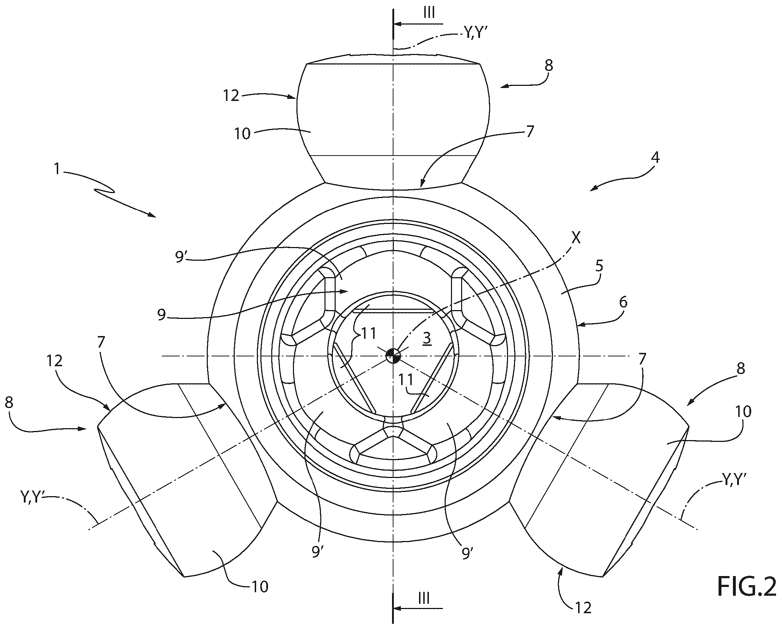

In Figures 1 to 3, the reference numeral 1 indicates by way of example a transmission unit, according to the present invention, for transmitting motion from a rotating body,
i.e., a transferring body, to a driven body. Advantageously, the transmission unit 1 is configured to be applied in an axle shaft and transmit motion from an engine to a wheel of a motor vehicle.

The transmission unit 1 comprises a rotating body 2, in particular a shaft 2, which has a longitudinal axis X and a longitudinal end e1. According to the illustrated example, the shaft 2 is an internally hollow tubular body. In other words, the shaft 2 has an internal cavity 3 axially facing outwards through the end e1. The shape and dimensions of the shaft 2 are variable. In all the figures, the shaft 2 is truncated and only the end e1 connecting with an external body (not illustrated) is illustrated. The other end of the shaft 2, which can be made in any manner, is not described and illustrated.

The transmission unit 1 further comprises a drive unit 4, which is fixed to the shaft 2 at the end e1, as will be better illustrated below. The drive unit 4 is configured to rotate the external body (not illustrated) around the longitudinal axis X.

According to the illustrated example, the drive unit 4 is fixed at the end e1 to the shaft 2. Without losing generality, the drive unit 4 can be fixed in any position along the shaft 2. Without losing generality and according to a variation not illustrated, the transmission unit 1 can comprise a plurality of drive units 4 fixed to the shaft 2 in different positions.

A transmission unit 1 according to the present invention can have both ends equal to each other. Herein below, only the end e1 is described for the sake of brevity; in particular, for the sake of brevity, only one drive unit 4 is described.

A drive unit 4 of the pin type is illustrated by way of example in Figures 1 to 3.

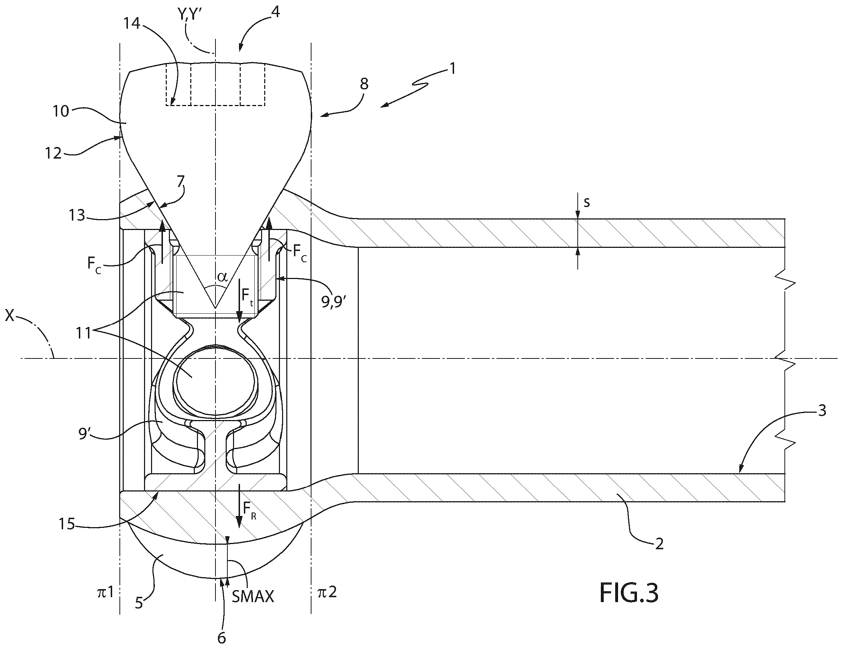

According to the example illustrated in Figures 1 to 3, the end e1 of the shaft 2 has an annular portion 5, which has a curved external surface 6. Preferably, as illustrated in Figure 3, the annular portion 5 is a spherical segment with two bases delimited radially outside the curved external surface 6 and laterally by two planes π1 and π2 parallel to each other and perpendicular to the longitudinal axis X. The dimensions of the annular portion 5 are variable. Without losing generality, according to the variations not illustrated, the annular portion 5 can be cylindrical, or curvilinear. The shape and dimensions of the annular portion 5 are variable.

The annular portion 5 is internally hollow, in particular it is passed through by the cavity 3 of the shaft 2.

The annular portion 5 has a plurality of radial seats 7 which radially pass through the annular portion 5 and put the cavity 3 in communication with the outside (Figure 3).

According to the illustrated example, there are three seats 7, which are equal to one another and are uniformly distributed around the longitudinal axis X. The number and distribution of the seats 7 are variable. The seats 7 of the same drive unit 4 can have different shapes and dimensions from one another.

Figure 3 illustrates an example of a seat 7, which is delimited by a conical-shaped surface. In other words, the seat 7 is axially symmetrical with respect to an axis Y which is transverse, in particular perpendicular, to the longitudinal axis X. The seat 7 illustrated in Figure 3 radially narrows towards the longitudinal axis X. In other words, the seat 7 narrows passing from the outside to the inside of the annular portion 5. Preferably, the seat 7 has an inclination angle α between 0 and 60°.

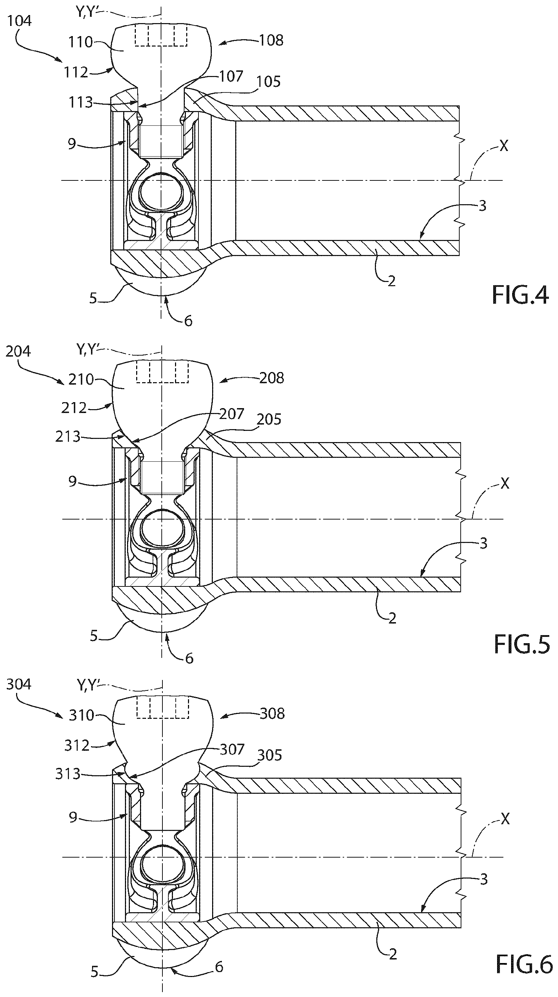

In Figure 4, the reference numeral 107 illustrates a variation of the seat, which is delimited by a cylindrical surface.

In Figure 5, the reference numeral 207 illustrates a further variation of the seat, which is delimited by a rotation surface with curved profile.

In Figure 6, the reference numeral 307 illustrates a further variation of the seat, which is delimited by a spherical surface.

Advantageously, the annular portion 5 is a single piece with the shaft 2. The annular portion 5 can be obtained by means of a production process chosen among a group of production processes which differ from each other by type. For example, the annular portion 5 can be obtained by: plastic deformation; chip removal; forging; 3D printing; etc.

According to the illustrated example, the annular portion 5 is connected with the shaft 2. The annular portion 5 has a maximum thickness smax greater than the thickness of the shaft 2. In other words, the annular portion 5 is reinforced with respect to the shaft 2.

Advantageously, the shaft 2 and the annular portion 5 are made of special, in particular light, alloys, for example: titanium, titanium alloys, high-strength steels (for example maraging steel), high-strength composite materials provided with metal inserts in the coupling zone with the drive element 8 and the anchoring element 9. In this way, the shaft 2 and the annular portion 5 are, with the same dimensions, decidedly lighter with respect to a similar solution made of steel.

The drive unit 4 comprises a plurality of drive elements 8, which protrude radially outside the shaft 2, and one or more anchoring elements 9, each of which is configured to fix the respective drive element 8 to the shaft 2, as will be better illustrated below.

Advantageously, each drive element 8 and/or each anchoring element 9 is made of hard and wear-resistant material, in particular resistant to friction. For example, each drive element 8 and/or each anchoring element 9 is made of high-strength steel, case-hardened or hardened steel.

The anchoring element 9 can also be made of special, in particular light, alloys, for example: titanium, titanium alloys, high-strength steels (for example maraging steel), high-strength composite materials provided with metal inserts in the coupling zone with the drive element 8 and the shaft 2. In this way, advantageously, the transmission unit 1 is further lightened.

According to the embodiment illustrated in Figures 1 to 3, each drive element 8 is a pin. Each pin 8 is a rotation body around an axis Y' of symmetry, in particular perpendicular to the longitudinal axis X. Each pin 8 comprises a head 10 and a shank 11. Preferably, each pin 8 is a monolithic body made in a single piece.

According to the illustrated example (Figure 3), the head 10 of each pin 8 has a friction portion 12 and a contact portion 13. The contact portion 13 is interposed along the axis Y', between the friction portion 12 and the shank 11.

The shank 11 is inserted through a respective seat 7 and projects radially inside the cavity 3 of the shaft 2. The contact portion 13 of the pin 8 is housed, in use, inside the seat 7 and forms a shape and/or interference coupling with the respective seat 7.

According to the example illustrated in Figure 3, the contact portion 13 is frustoconical and forms a frustoconical coupling with the respective seat 7 of the annular portion 5.

The friction portion 12 projects radially outside the annular portion 5 and is configured to be coupled, in use, against an external contact element (of known type and not illustrated), for example a bearing (but also rollers, needles, special bearings or equivalent components) in the event of application in a joint of the homokinetic or tripod type. According to the illustrated example, the friction portion 12 is spherical.

Advantageously, each anchoring element 9 is housed inside the cavity 3 and is applied to a respective shank 11 of a pin 8. Preferably, the anchoring element 9 fixes a respective pin 8 to the shaft 2 and constrains the respective pin 8 to translation along the axis Y'.

Advantageously, the anchoring element 9 applies a determined tensioning force Ft to the shank 11 of the pin 8 (Figure 3). According to variations not illustrated, the connection between the anchoring element 9 and the pin 8 can also occur by means of welding, plastic deformation, interference, brazing or other equivalent solutions.

Advantageously, the anchoring element 9 applies a radial compression force Fc to the annular portion 5 (Figure 3).

According to the example illustrated in Figures 1 to 3, the shank 11 of the pin 8 is threaded. The head 10 of the pin 8 has a groove 14 facing radially outwards and configured to house, in use, a respective portion of a tightening tool (for example an Allen wrench or screwdriver or equivalent tool). The anchoring element 9 is a nut. The shank 11 of the pin 8 is inserted and screwed inside a respective nut 9. The presence of the groove 14 allows screwing and facilitating the fixing of the shank 11 to the nut 9.

According to the example illustrated in Figures 1 to 3, the anchoring element 9 is a single annular body in which the nuts 9' are obtained. The distribution of the nuts 9' is in accordance with the distribution of the seats 7 so that each nut 9' is aligned with a respective seat 7. According to the illustrated example, there are three nuts 9' and they are uniformly distributed around the longitudinal axis X.

According to the illustrated example, the seats 7 are through seats. According to a variation, not illustrated, the seats 7 are closed. In the latter case, the anchoring element 9 forms a closing element for blocking or limiting the passage of fluids, greases or lubricating material.

Advantageously, the anchoring element 9 has a circular external surface 15. The annular portion 5 is fitted on the external surface 15 of the anchoring element 9 with interference, so as to apply a determined radial preload between the anchoring element 9 and the annular portion 5. According to a variation not illustrated, the annular portion 5 can be fixed to the anchoring element 9 by means of welding, brazing or deformation.

According to the variation illustrated in Figure 4, the contact portion 113 is cylindrical and forms a cylindrical coupling with the respective seat 107 of the annular portion 105.

According to the example illustrated in Figure 5, the contact portion 213 is curved and forms a coupling with the respective seat 207 of the annular portion 205.

According to the example illustrated in Figure 6, the contact portion 313 is spherical and forms a spherical coupling with the respective seat 307 of the annular portion 305.

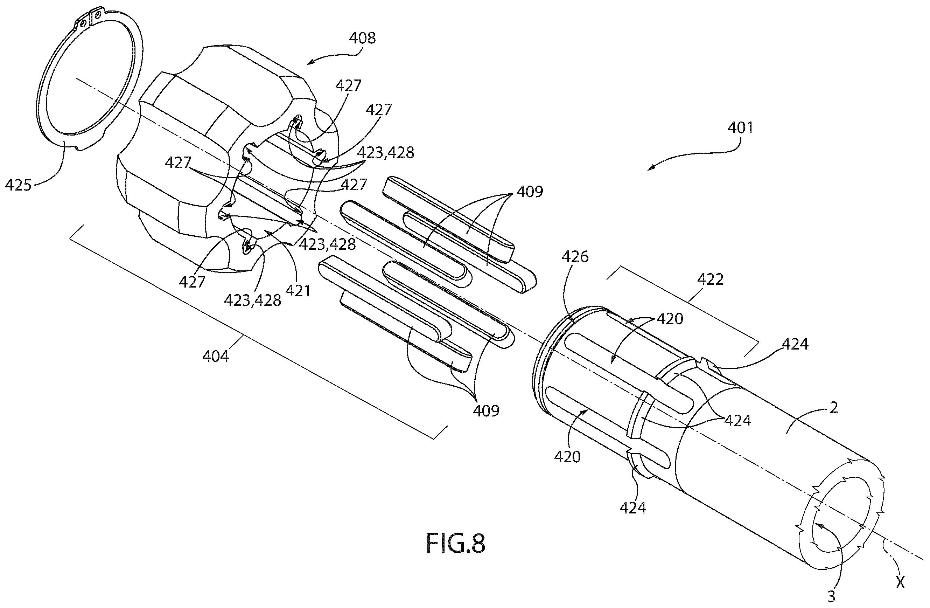

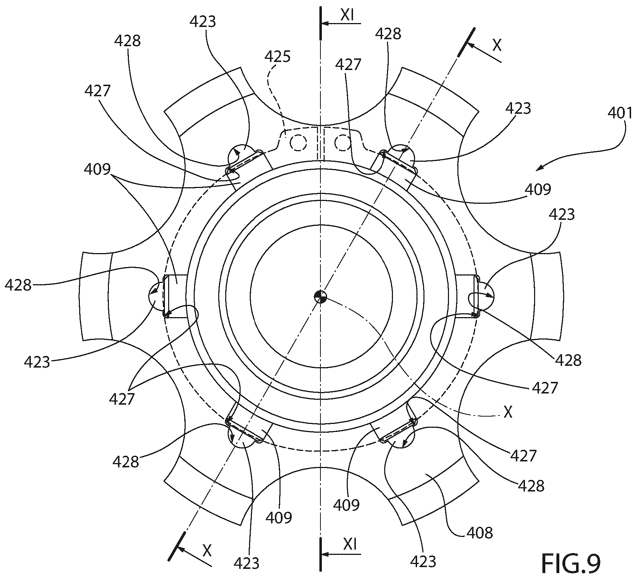

In Figures 8 to 10, the reference numeral 401 indicates a further embodiment of a transmission unit according to the present invention. The elements in common with the solution described above maintain the same numbering herein below and in the figures and are not repeated for the sake of brevity. As indicated above, the transmission unit 401 can also be applied in any position of the shaft 2. Herein below, in a manner similar to that illustrated above, the transmission unit 401 applied to the end e1 of the shaft 2 is described.

The transmission unit 401 comprises a drive element 408 which is fixed to the shaft 2, as will be better illustrated below and is configured to rotate the external body (not illustrated) around the longitudinal axis X.

According to the example illustrated, the drive unit 404 comprises, in turn, a drive element 408 and a plurality of fixing elements 409. In particular, the drive element 408 is a gear. The fixing elements 409 are keys. The external profile of the gear 408 is variable.

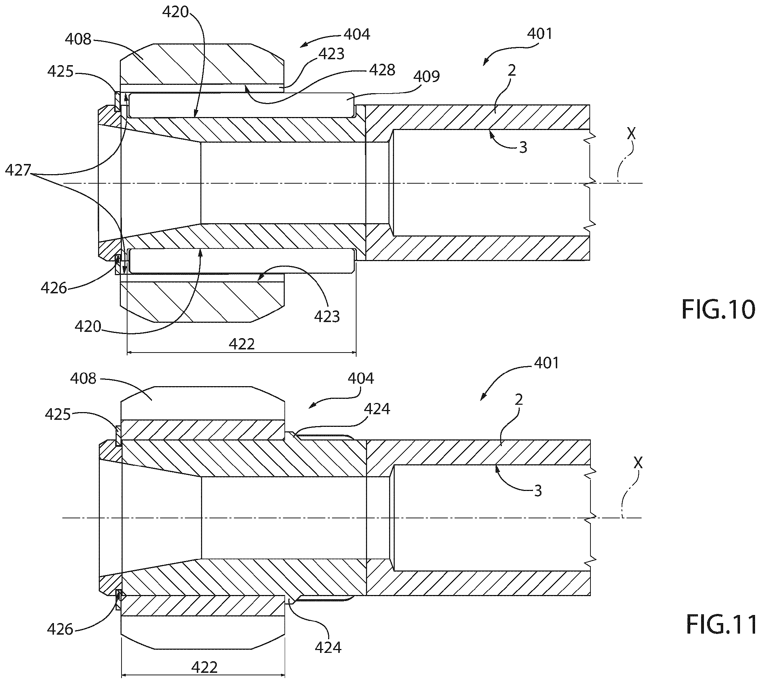

As illustrated in more detail in Figures 10 and 11, the shaft 2 has a plurality of keyways 420 extending along the longitudinal axis X.

The drive element 408 has a cavity 421 which is configured so as to be able to allow a shape and/or interference coupling with a respective coupling portion 422 of the shaft 2. According to the illustrated example, the cavity 421 is circular and of the through type. The drive element 408 has a plurality of keyways 423 extending longitudinally and facing inside the cavity 421. The number and angular distribution of the keyways 423 of the drive unit 408 correspond to the number and distribution of the keyways 420 of the shaft 2.

The number of keys 409 corresponds to the number of keyways 420 and 421. The keyways 420, 421 and the keys 409 are configured to form a key coupling between the drive element 408 and the shaft 2. The number, shape and size of the keys 409 are variable. The number, shape, size and distribution of the keyways 420 and 423 are variable.

The shaft 2 comprises a plurality of circular sectors 424, which are coplanar to a plane perpendicular to the longitudinal axis X. Each circular sector 424 protrudes radially outside the side surface thereof. Two adjacent circular sectors 424 are spaced from each other by a respective keyway 420. Each circular sector 424 is an axial abutment element for the drive element 408. The coupling portion 422 along the shaft 2 is axially delimited by the circular sectors 424 and by a circular channel 426 made on the shaft 2. At least one portion of the keyways 420 extends along the coupling portion 422.

The gear 408 is fitted on the shaft 2 and is constrained to the shaft 2 by means of the keys 409. Each key 409 is inserted radially, in part, inside a respective keyway 420 of the shaft 2 and, in part, inside a respective keyway 423 of the gear 408. The keyway 433 of the gear 408 has a shoulder 427 which radially constrains the key 409 between the gear 408 and the shaft 2. Each key 409 transmits the shear motion in a known manner. The shape and size of each key 409 and of the respective keyways 420 and 423 are variable.

Advantageously, each keyway 423 of the gear 408 has a channel 428 configured to redistribute, during the transmission of motion, the tensions between the gear 408 and the shaft 2 in a determined manner. In particular, the channel 428 is configured so that each key 409 works mainly in shear and that the transmission forces between the gear 408 and the shaft 409 are applied on flat surfaces in contact with each other. In other words, during the transmission of motion there is no or as little relative motion as possible between the gear 408 and the shaft 2. According to the illustrated example, each channel 428 is semi-cylindrical in shape with concavity facing the cavity 421. Each channel 428 extends longitudinally to the gear 408.

Advantageously, the shaft 2 is made of special, in particular light, alloys, for example: titanium, titanium alloys, steels such as high-strength steels generally called maraging steel, high-strength composite materials provided with metal inserts at the coupling zones. In this manner the shaft 2, with the same dimensions, is decidedly lighter with respect to a similar solution made of steel.

Advantageously, the drive element 408 (i.e. the gear 408) and/or each anchoring element 409 (i.e. key 409) is made of hard and wear-resistant material, in particular resistant to friction. For example, each drive element 408 and/or each anchoring element 409 is made of high-strength steel, case-hardened or hardened steel.

From the above it follows that a transmission unit 1, 401 of the type described above can be decidedly lighter with respect to a transmission unit of the traditional type thanks to the fact that the shaft 2 is made of special alloys, such as titanium. Advantageously, in a transmission unit 1, 401 of the type described above, the materials are optimized based on the functionality of the individual parts. Furthermore, advantageously, the fact of providing one or more drive elements 8, 408 made of a material which is hard and wear-resistant, in particular resistant to friction, allows guaranteeing the wear-resistant performance of a traditional transmission unit.

Advantageously, the coupling methods described above between the shaft 2, the drive element 8, 408 and the respective anchoring element 9, 409 allow obtaining a fixed coupling such as to substantially form a single unit in which the relative motions, i.e. the friction, are eliminated or reduced as much as possible.

A transmission unit 1, 401 of the type described above can find different applications; for example, it can find advantageous application as a transmission unit 1, 401 of an axle shaft for motor vehicles.

## Claims

1. A transmission unit for transmitting motion from an actuator to a driven body; the transmission unit (1; 401) comprising a rotating body (2) and a drive unit (4; 404); wherein, the rotating body (2) has a longitudinal axis (X) and is configured to be rotated, in use, by an actuator, in particular an engine; wherein, the drive unit (4; 404) is configured to couple, in use, with a driven body; wherein, said drive unit (4; 404) is fixed to said rotating body (2), so as to be integral in the rotation around the longitudinal axis (X) with rotating body (2).

2. A transmission unit according to claim 1, wherein, said rotating body (2) is made of a lightweight material and said drive unit (4; 404) is made of wear-resistant material; in particular, the rotating body (2) is a shaft made of a material of choice from: titanium or titanium alloys, high-strength steel such as maraging steel, high-strength composite material; and wherein the drive unit (4; 404) is made of steel, in particular hardened or case-hardened steel.

3. A transmission unit according to claim 1 or 2, wherein the rotating body (2) has a plurality of radial seats (7; 420); wherein, the drive unit (4; 404) comprises one or more drive elements (8; 408), each of which is coupled with a respective seat (7; 420) and protrudes radially outwards from the rotating body (2); wherein the drive unit (4; 404) comprises one or more anchoring elements (9; 409), each of which is configured to fix the respective drive element (8; 408) to the rotating body (2).

4. A transmission unit according to claim 3, wherein the rotating body (2) has a through inner cavity (3) and an annular portion (5); wherein, each seat (7; 420) is made through said annular portion (5); wherein, each drive element (8; 408) comprises a head (10) and a shank (11); wherein, the head (10) has a friction portion (12) and a contact portion (13), which is interposed between the friction portion (12) and the shank (11); wherein, the shank (11) is inserted through a respective seat (7; 420) and protrudes radially inwards from said cavity (3); wherein, the contact portion (13) of the drive element (8; 408) is housed, in use, within a respective seat (7; 420), so as to form a shape and/or interference coupling; wherein, each anchoring element (9; 409) is housed within said cavity (3) and is applied to a respective shank (11), so as to fix the shank (11) to the rotating body (2).

5. A transmission unit according to claim 4, wherein the anchoring element (9; 409) is a nut and the shank (11) is threaded so that the drive element (8; 408) is screwed to the anchoring element (9; 409); in particular, a determined preload force is applied to the drive element (8; 408); or, the anchoring element (9; 409) is fixed to the shank (11) by means: shape and/or interference connection, welding, brazing, plastic deformation.

6. A transmission unit according to claim 4 or 5, wherein the head (10) of each drive element (8; 408) has a groove (14) which is configured to house, in use, a respective portion of a tightening tool.

7. A transmission unit according to any claim from 4 to 6, wherein the anchoring element (9; 409) has a circular external surface which is placed in contact against the annular portion (5); in particular, the anchoring element (9; 409) is tightened to the annular portion (5) so as to apply a determined preload force.

8. A transmission unit according to any claim from 4 to 7, wherein each seat (7; 420) is laterally delimited by a cone-shaped or cylindrical or spherical surface or by a rotation surface.

9. A transmission unit according to any claim from 1 to 3, wherein the drive element (8; 408) is a gear and the anchoring elements (9; 409) are keys; wherein the rotating body (2) has a plurality of first keyways (420), each of which houses a respective key (409); wherein the gear has an inner cavity (3) which has, in turn, a plurality of second keyways (423); wherein, the gear is fitted on the shaft (2) and each first keyway (420) is configured to align with a respective second keyway (423); wherein each key (409) is housed between a first keyway (420) and a respective second keyway (423).

10. A transmission unit according to claim 9, wherein each second keyway (423) has a longitudinal channel (428) of semi-cylindrical shape facing towards the cavity (3) inside the gear.
